# EUROPÄISCHE PATENTSCHRIFT

(11) **EP 3 223 998 B1**
(45) Veröffentlichungstag und Bekanntmachung des Hinweises auf die Patenterteilung: **09.10.2019**
(21) Anmeldenummer: 15813254.8
(22) Anmeldetag: 04.11.2015
(51) Int. Cl.: B23Q 3/00

(54) **VORRICHTUNG ZUR SPANENDEN BEARBEITUNG EINES FLÄCHIGEN WERKSTÜCKS**
DEVICE FOR MACHINING A PLANAR WORKPIECE
DISPOSITIF POUR L'USINAGE D'UNE PIÈCE PLANE

(30) Priorität: 24.11.2014 DE 102014117130
(43) Veröffentlichungstag der Anmeldung: 04.10.2017
(73) Patentinhaber: Rittal GmbH & Co. KG, 35745 Herborn (DE)
(72) Erfinder: KIENHOLZ, Matthias, 35444 Biebertal (DE); MARTIN, Lars, 35516 Münzenberg (DE); WURM, Kersten, 63128 Dietzenbach (DE); GLOWACKI, Alexander, 61184 Karben (DE)
(74) Vertreter: Angerhausen, Christoph
(86) Internationale Anmeldenummer: PCT/DE2015/100466
(87) Internationale Veröffentlichungsnummer: WO 2016/082821

(56) Entgegenhaltungen:
- EP-A1- 0 208 079
- WO-A1-2015/176753
- US-A- 3 587 391
- US-A- 3 942 411

## Beschreibung

Die Erfindung geht aus von einer Vorrichtung zur spanenden Bearbeitung eines flächigen Werkstücks, mit einem Maschinenständer, der eine Auflagefläche für ein flächiges Werkstück aufweist, und mit einem relativ zu der Auflagefläche verfahrbaren Bearbeitungskopf, der ein Werkzeug für die spanende Bearbeitung des Werkstücks sowie eine Niederhaltereinheit mit einem Andruckteller aufweist, mit dem das Werkstück gegen die Auflagefläche gedrückt ist, wobei der Andruckteller mehrteilig und vorzugsweise zweiteilig ausgeführt ist und zumindest einer der Andrucktellerteile in Relation zu zumindest einem weiteren der Andrucktellerteile zwischen einer Andruckposition, in der der Andrucktellerteil bei auf die Auflagefläche aufgelegtem Werkstück das Werkstück gegen die Auflagefläche drückt, und einer Freigabeposition, in der der Andrucktellerteil bei auf die Auflagefläche aufgelegtem Werkstück einen Mindestabstand zu dem Werkstück aufweist, hin und her beweglich ist. Eine derartige Vorrichtung ist aus der US 3,587,391 A bekannt. Eine weitere Vorrichtung ist außerdem aus der DE 10 2008 014 358 A1 bekannt.

Gattungsgemäße Vorrichtungen dienen insbesondere zur Konfektionierung von Montageplatten, wie sie für den Innenausbau von Schaltschränken verwendet werden. Die elektronischen Schaltschrankeinbauten sind gemäß einem Verteilungsmuster auf der Montageplatte angeordnet, das z.B. in thermischer Hinsicht oder hinsichtlich der Verdrahtungswege optimiert sein kann. Mit Hilfe der erfindungsgemäßen Vorrichtung ist es möglich, in die Montageplatte entsprechend dem Verteilungsmuster Bohrungen, Ausschnitte und dergleichen einzubringen, welche der Montage der elektronischen Bauteile oder zu deren Wärmeableitung dienen.

Für die Bearbeitung der Montageplatte wird ein Bearbeitungskopf, der ein Werkzeug, beispielsweise einen Fräser, aufweist, über das Werkstück geführt. Bei flächigen Werkstücken, wie etwa Montageplatten, kann es bei der spanenden Bearbeitung zum Bauchen des Werkstücks oder zur Ausbildung von Vibrationen kommen, was einen negativen Einfluss auf die Werkzeuglebensdauer sowie die erreichbare Werkzeugvorschubgeschwindigkeit hat. Die entstehenden Vibrationen sind häufig auch mit einer erheblichen Geräuschemission verbunden.

Zur Vermeidung des Bauchens und von Vibrationen ist es aus der DE 10 2008 014 358 A1 bekannt, den Bearbeitungskopf mit einer Niederhaltereinheit auszustatten, die einen Andruckteller aufweist, mit dem das Werkstück gegen die Auflagefläche gedrückt wird. Das flächige Werkstück ist auf dem Maschinenständer in der Regel mit Haltepratzen befestigt, welche am Randbereich des Werkstücks angreifen. Der aus dem Stand der Technik bekannte Andruckteller hat den Nachteil, dass er mit den Haltepratzen kollidieren kann, wenn der Bearbeitungskopf das Werkstück im Randbereich bearbeitet. Mit den aus dem Stand der Technik bekannten Vorrichtungen ist es somit nicht möglich, Bearbeitungen des Werkstücks nahe seines Randbereiches durchzuführen. Es ist daher gängige Praxis, den Andruckteller im Randbereich des Werkstücks von dem Werkstück abzuheben, so dass die Haltepratzen überfahren werden können, ohne mit dem Andruckteller zu kollidieren. Dies hat dann jedoch wieder zur Folge, dass das Werkstück durch den Bearbeitungsvorgang anschwingt oder baucht, mit den zuvor beschriebenen negativen Folgeeffekten.

Es ist daher die Aufgabe der Erfindung, eine gattungsgemäße Vorrichtung derart weiterzuentwickeln, dass sie auch die Werkstückbearbeitung im Randbereich unter Beibehaltung einer effektiven Schwingungsdämpfung ermöglicht.

Diese Aufgabe wird erfindungsgemäß durch eine Vorrichtung mit den Merkmalen des Patentanspruchs 1 gelöst. Die abhängigen Ansprüche sind jeweils vorteilhafte Ausführungsformen der Erfindung.

Demgemäß zeichnet sich die erfindungsgemäße Vorrichtung dadurch aus, dass der Andruckteller eine horizontale oder eine vertikale Teilung aufweist, wobei mindestens eines der Andrucktellerteile über eine Verstelleinheit zwischen der Andruckposition und der Freigabeposition in einer Schwenkbewegung hin und her geführt ist..

Während es bei den aus dem Stand der Technik bekannten Vorrichtungen allenfalls möglich war, das Werkstück im Randbereich zu bearbeiten, wenn der Andruckteller vollständig von dem Werkstück abgehoben ist, was zur Entstehung von Vibrationen des Werkstücks geführt hat, erlaubt es die erfindungsgemäße Vorrichtung, dass zumindest ein Teil des Andrucktellers auch im Randbereich noch das Werkstück gegen die Auflagefläche drückt, indem gerade nur derjenige Andrucktellerteil, welcher im Randbereich mit einer Haltepratze oder dergleichen kollidieren könnte, von dem Werkstück abgehoben wird. Dadurch wird erreicht, dass mit der erfindungsgemäßen Vorrichtung auch Bearbeitungen des Werkstücks im Randbereich möglich sind, ohne dass dabei der Andruckteller vollständig von dem Werkstück abgehoben werden muss.

Der Einsatzbereich der erfindungsgemäßen Vorrichtung wird dadurch noch weiter erhöht, dass sämtliche Andrucktellerteile unabhängig voneinander zwischen einer Andruckposition, in der der jeweilige Andrucktellerteil bei auf die Auflagefläche aufgelegtem Werkstück das Werkstück gegen die Auflagefläche drückt, und einer Freigabeposition, in der der jeweilige Andrucktellerteil bei auf die Auflagefläche aufgelegtem Werkstück einen Mindestabstand zu dem Werkstück aufweist, hin und her beweglich sind.

Die Verstelleinheit kann beispielsweise einen Pneumatik- oder einen Hydaulikantrieb aufweisen. Bei einem Andruckteller, welcher aus zwei Andrucktellerteilen zusammengesetzt ist, ist beispielsweise auch denkbar, dass die beiden Andrucktellerteile über ein Scharnier miteinander verbunden sind, so dass jeweils eines der beiden Andrucktellerteile bedarfsweise von dem Werkstück abgeklappt werden kann, wenn das Werkstück im Randbereich bearbeitet werden soll.

Bei noch einer anderen Ausführungsform der Erfindung ist vorgesehen, dass der Andruckteller einen Werkzeugdurchlass aufweist, der sich senkrecht zur Auflageseite durch den Andruckteller hindurch erstreckt, wobei sich der Öffnungsquerschnitt des Werkzeugdurchlasses zwischen den Andrucktellerteilen anteilig, und bei zweiteiliger Ausführung vorzugsweise hälftig, aufteilt, oder sich vollständig über einen der Andrucktellerteile erstreckt.

Bei noch einer anderen Ausführungsform der Erfindung ist der Andruckteller hälftig geteilt, so dass die beiden Andrucktellerteile eine im Wesentlichen gleich große Teilauflageseite aufweisen, wobei der Werkzeugdurchlass als ein erster und ein zweiter Ausschnitt im Randbereich der beiden Andrucktellerteile ausgebildet ist.

Vorzugsweise ist an einer der Auflageseite gegenüber liegenden Seite des Andrucktellers eine Spanabsaugung ausgebildet, die eine Absaugkammer aufweist, in die der Werkzeugdurchlass und eine Saugleitung münden. Erstreckt sich die Absaugkammer über mehrere Andrucktellerteile, so ist es erforderlich, dass auch die Absaugkammer entsprechend mehrteilig ausgebildet ist, um bei der Verlagerung eines der Andrucktellerteile gegenüber den übrigen Andrucktellerteilen auf die neue Geometrie reagieren zu können. Sind die Andrucktellerteile beispielsweise linear und senkrecht zur Auflagefläche zueinander verstellbar, so kann vorgesehen sein, dass auch die Absaugkammer eine Teilung aufweist, die sich senkrecht zur Auflagefläche erstreckt, so dass sich bei der Verlagerung eines der Andrucktellerteile der betreffende Absaugkammerteil entsprechend linear verlagert.

Um die Beweglichkeit des Bearbeitungkopfes auf dem Werkstück zu verbessern, ist bei einer Ausführungsform der Erfindung vorgesehen, dass auf der Auflageseite des Andrucktellers eine Leichtlauflagerung angeordnet ist, sodass der Bearbeitungskopf bei auf dem Werkstück aufgelegtem Andruckteller leichtgängig über die Werkstückoberfläche geführt werden kann. Die Verwendung von Leichtlauflagerungen hat sich nicht nur für mehrteilige Andruckteller als vorteilhaft herausgestellt, sondern auch für einteilige.

Um zu vermeiden, dass auf der Werkstückoberfläche befindliche Fremdkörper, etwa Metallspäne, das Werkstück verkratzen, wenn der Andruckteller über die Werkstückoberfläche geführt wird, ist bei einer Ausführungsform der Erfindung vorgesehen, dass die Leichtlauflagerung mindestens eine von Druckluft umspülte Kugelrolle aufweist, so dass sich im Bereich um die Kugelrolle befindende Fremdkörper auf dem Werkstück von der Kugelrolle ferngehalten werden. Vorzugsweise weist der Andruckteller an seiner Auflagerseite drei oder vier von Druckluft umspülte Kugelrollen auf, so dass der Andruckteller lediglich über die Kugelrollen mit dem Werkstück in Kontakt steht und somit wirkungsvoll Beschädigungen des Werkstücks vorgebeugt wird.

Weitere Einzelheiten der Erfindung werden anhand der nachstehenden Figuren erläutert. Dabei zeigt:
- Figur 1: eine Ausführungsform einer Niederhaltereinheit in perspektivischer Rückansicht bei gleich ausgerichteten Andrucktellerteilen, die nicht zur Erfindung gehört;
- Figur 2: die Ausführungsform gemäß Figur 1 in perspektivischer Frontansicht;
- Figur 3: die Ausführungsform gemäß Figur 1 in perspektivischer Frontansicht, wobei der obere Andrucktellerteil gegenüber dem unteren Andrucktellerteil verlagert ist;
- Figur 4: die Ausführungsform gemäß Figur 3 in der Seitenansicht;
- Figur 5: die Ausführungsform gemäß Figur 1 in perspektivischer Frontansicht, wobei der untere Andrucktellerteil gegenüber dem oberen Andrucktellerteil verlagert ist;
- Figur 6: die Ausführungsform gemäß Figur 5 in der Seitenansicht;
- Figur 7: die Ausführungsform gemäß Figur 1, wobei beide Andrucktellerteile in einer ausgefahrenen Stellung angeordnet sind; und
- Figur 8: die Ausführungsform gemäß Figur 7 in der Seitenansicht.

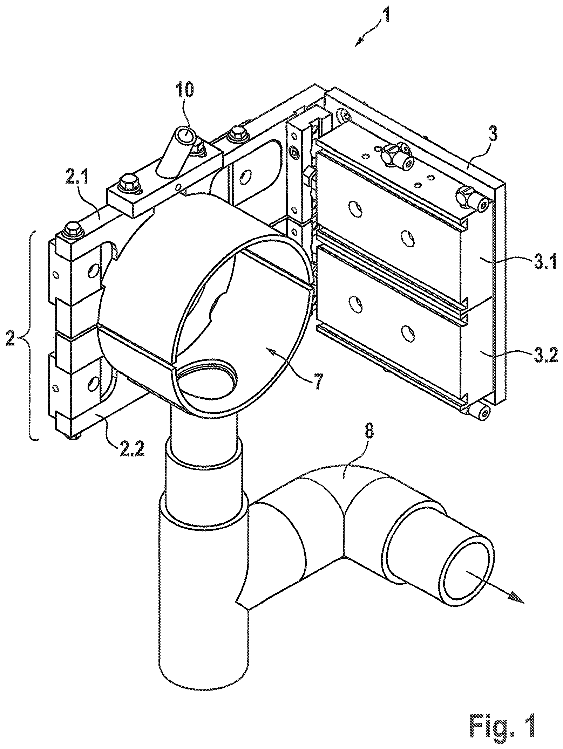

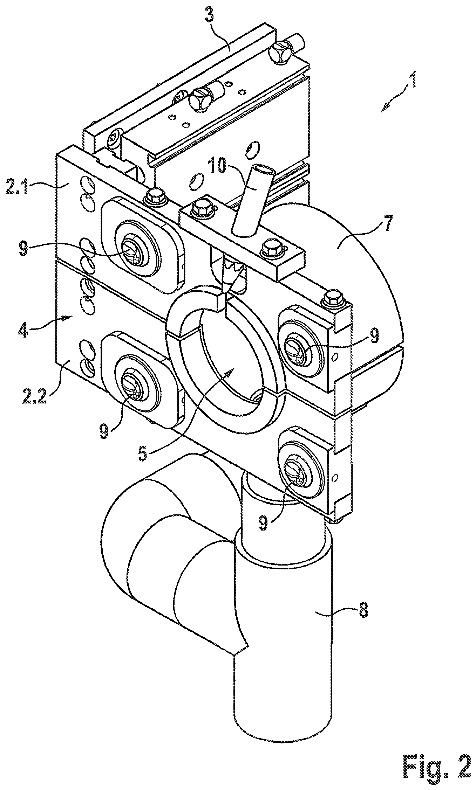

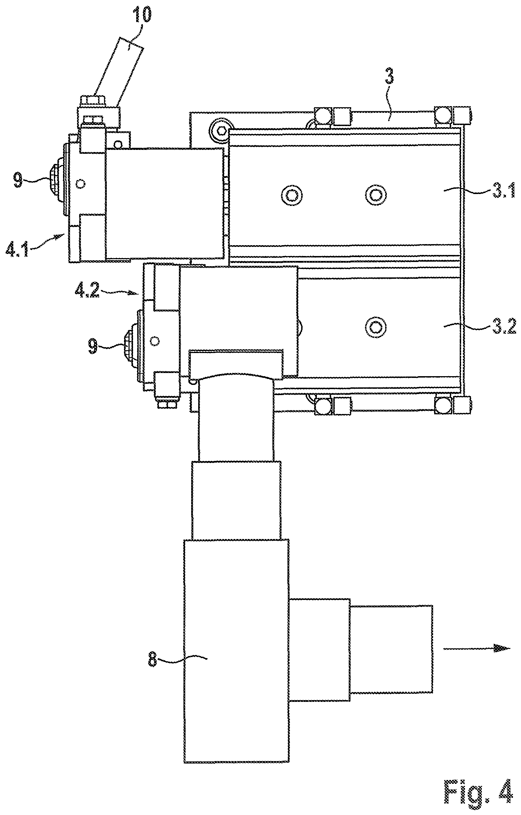

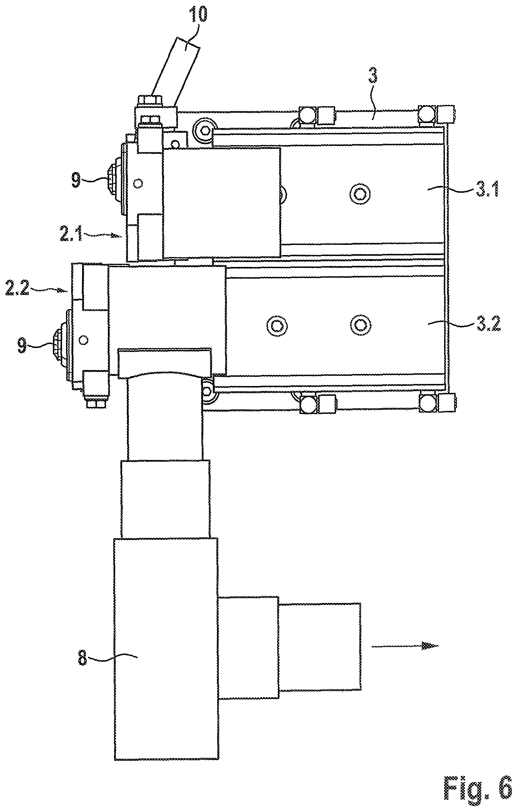

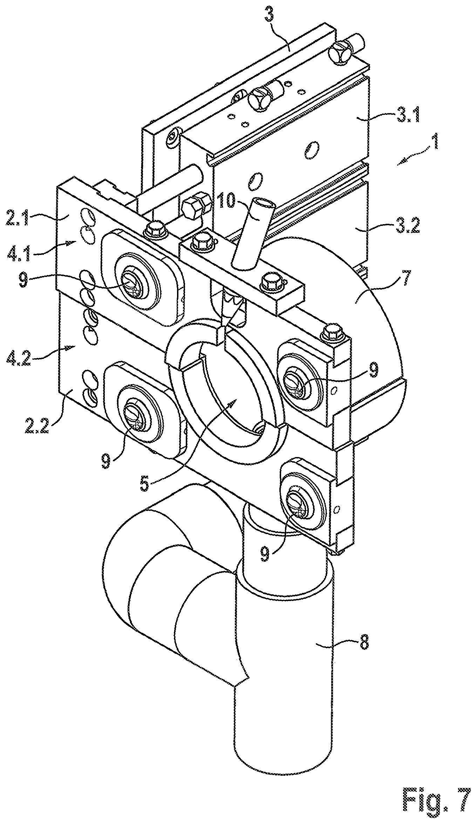

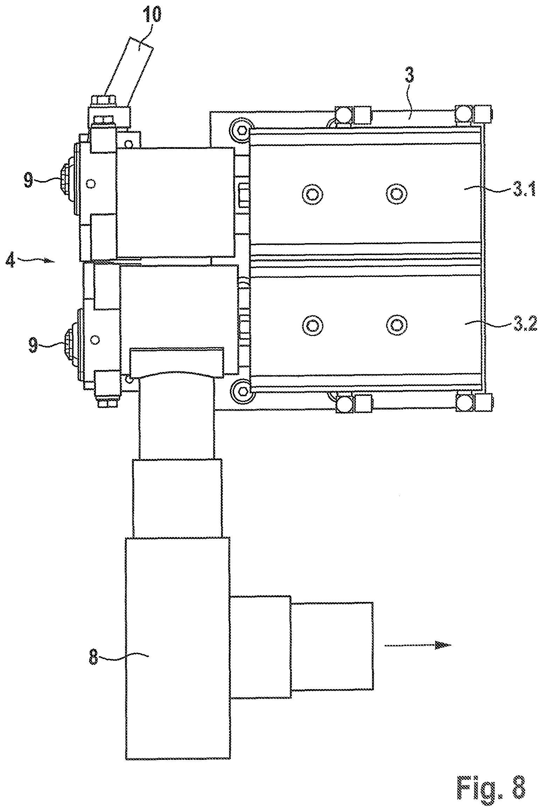

Die Figuren 1 bis 8 zeigen eine nicht zur Erfindung gehörende Ausführungsform der Niederhaltereinheit 1 bei unterschiedlichen Stellungen der beiden Andrucktellerteile 2.1, 2.2. Grundsätzlich besteht die Niederhaltereinheit 1 im Wesentlichen aus einem Andruckteller 2, der über eine Verstelleinheit 3 linear verstellbar ist. Der Andruckteller 2 ist in zwei im Wesentlichen gleichartige, separate Andrucktellerteile 2.1, 2.2 horizontal unterteilt. Beide Andrucktellerteile 2.1, 2.2 können unabhängig voneinander über die Verstelleinheit 3 linear verstellt werden. Dazu weist die Verstelleinheit 3 eine obere Pneumatikeinheit 3.1 auf, die am Randbereich des oberen Andrucktellerteils 2.1 angreift, sowie eine untere Pneumatikeinheit 3.2, die am unteren Andrucktellerteil 2.2 angreift. Mit Hilfe der Pneumatikeinheiten 3.1, 3.2 sind die beiden Andrucktellerteile 2.1, 2.2 linear zueinander und senkrecht zur Auflagefläche des Werkstücks verstellbar.

Der Andruckteller weist einen Werkzeugdurchlass 5 auf, über den ein Werkzeug, beispielsweise ein Fräser, dem Werkstück zugeführt werden kann, wenn sich der Andruckteller 2 in der Andruckposition befindet. Der Werkzeugdurchlass 5 mündet in eine Absaugkammer 7 an der der Auflageseite 4 des Andrucktellers 2 gegenüberliegenden Seite. Weiterhin mündet eine Saugleitung 8 einer Spanabsaugung in die Absaugkammer 7. Der obere Andrucktellerteil 2.1 weist weiterhin eine Minimalschmierung 10 auf, deren Ausströmdüse an der Auflageseite 4 dem Werkzeugdurchlass 5 beigeordnet ist.

Weiterhin sind an der Auflageseite 4 Kugelrollen 9 angeordnet, welche einen leichtgängigen Transport der Niederhaltereinheit 1 über das Werkstück gewährleisten sollen. Die Kugelrollen 9 sind als luftumströmte Kugelrollen ausgebildet. Die Luftumströmung dient bei aus dem Stand der Technik bekannten Kugelrollen dazu, um den Rollwiderstand zwischen der Kugel und ihrer Lageraufnahme zu verringern und damit den Transport schwerer Lasten zu erleichtern. Bei der vorliegenden Ausführungsform wird die Luftumströmung jedoch dazu verwendet, um Verunreinigungen, welche sich auf dem Werkstück befinden können, beispielsweise Späne, von den Kugelrollen fernzuhalten, so dass eine Beschädigung des Werkstücks, beispielsweise durch Verkratzen, wirkungsvoll verhindert wird.

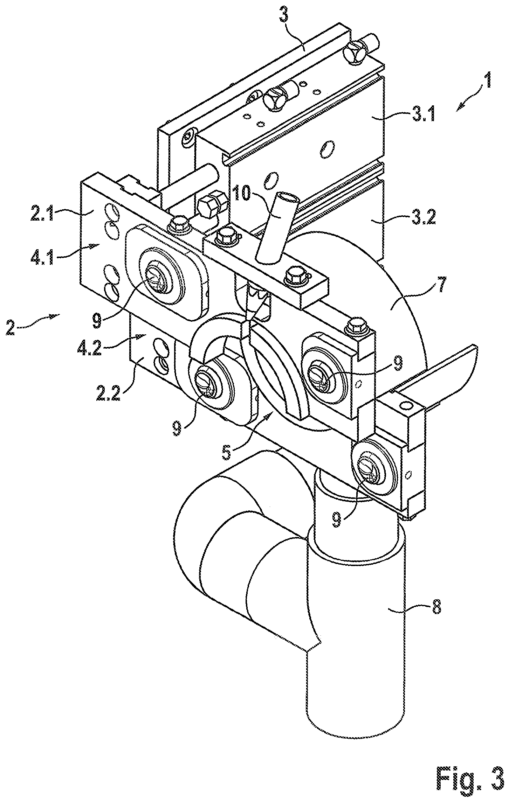

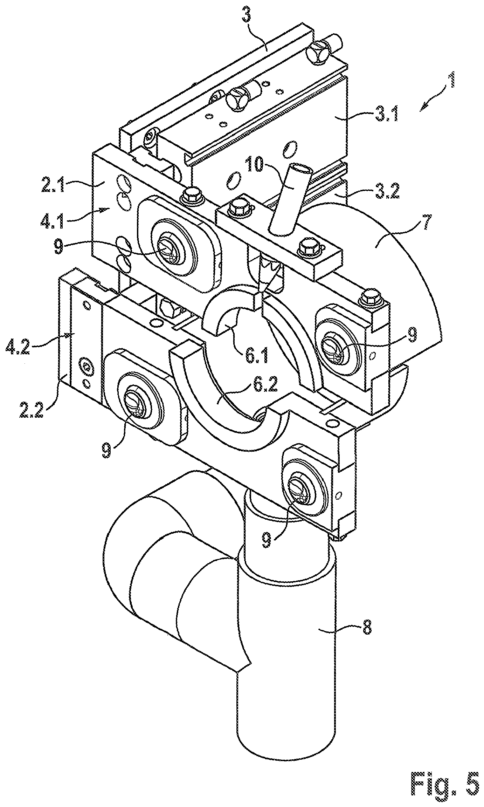

Die Figur 3 lässt die Zweiteilung sowohl des Andrucktellers 2 als auch des Werkzeugdurchlasses 5 erkennen. Der Andruckteller 2 weist gerade eine horizontale Teilung auf, welche auch den Werkzeugdurchlass 5 gerade hälftig teilt. Der Werkzeugdurchlass 5 ist somit gerade durch zwei halbkreisförmige Ausnehmungen 6.1, 6.2 (siehe Figur 5) an gegenüber liegenden Längskanten der Andrucktellerteile 2.1, 2.2 ausgebildet, welche bei Gleichausrichtung der Andrucktellerteile 2.1, 2.2, wie es in den Figuren 1, 2, 7 und 8 gezeigt ist, einen geschlossenen Werkzeugdurchlass 5 bilden. Weiterhin lässt die Zusammenschau der Figuren erkennen, dass die Absaugkammer 7 eine der Teilung des Andrucktellers 2 entsprechende horizontale Teilung aufweist, mit einer oberen und einer unteren Kammerhälfte, wobei die obere Kammerhälfte gerade mit dem oberen Andrucktellerteil 2.1 und die untere Kammerhälfte mit dem unteren Andrucktellerteil 2.2 verbunden ist, so dass die Absaugkammerteile bei der Verlagerung der Andrucktellerteile 2.1, 2.2 zueinander entsprechend mit verlagert werden.

### Bezugszeichenliste:

- 1: Niederhaltereinheit
- 2: Andruckteller
- 2.1: oberer Andrucktellerteil
- 2.2: unterer Andrucktellerteil
- 3: Verstelleinheit
- 3.1: obere Pneumatikeinheit
- 3.2: untere Pneumatikeinheit
- 4: Auflageseite
- 4.1: obere Teilauflageseite
- 4.2: untere Teilauflageseite
- 5: Werkzeugdurchlass
- 6.1: unterer Ausschnitt
- 6.2: oberer Ausschnitt
- 7: Absaugkammer
- 8: Saugleitung
- 9: Kugelrolle
- 10: Minimalschmierung

## Patentansprüche

1. Vorrichtung zur spanenden Bearbeitung eines flächigen Werkstücks, mit einem Maschinenständer, der eine Auflagefläche für ein flächiges Werkstück aufweist, und mit einem relativ zu der Auflagefläche verfahrbarer Bearbeitungskopf, der ein Werkzeug für die spanende Bearbeitung des Werkstücks sowie eine Niederhaltereinheit (1) mit einem Andruckteller (2) aufweist, mit dem das Werkstück gegen die Auflagefläche gedrückt ist, wobei der Andruckteller (2) mehrteilig und vorzugsweise zweiteilig ausgeführt ist und zumindest einer der Andrucktellerteile (2.1, 2.2) in Relation zu zumindest einem weiteren der Andrucktellerteile (2.1, 2.2) zwischen einer Andruckposition, in der der Andrucktellerteil (2.1, 2.2) bei auf die Auflagefläche aufgelegtem Werkstück das Werkstück gegen die Auflagefläche drückt, und einer Freigabeposition, in der der Andrucktellerteil (2.1, 2.2) bei auf die Auflagefläche aufgelegtem Werkstück einen Mindestabstand zu dem Werkstück aufweist, hin und her beweglich ist, **dadurch gekennzeichnet, dass** der Andruckteller (2) eine horizontale oder eine vertikale Teilung aufweist, wobei mindestens eines der Andrucktellerteile (2.1, 2.2) über eine Verstelleinheit (3) zwischen der Andruckposition und der Freigabeposition in einer Schwenkbewegung hin und her geführt ist.

2. Vorrichtung nach Anspruch 1, bei der sämtliche Andrucktellerteile (2.1, 2.2) unabhängig voneinander zwischen einer Andruckposition, in der der jeweilige Andrucktellerteil (2.1, 2.2) bei auf die Auflagefläche aufgelegtem Werkstück das Werkstück gegen die Auflagefläche drückt, und einer Freigabeposition, in der der jeweilige Andrucktellerteil (2.1, 2.2) bei auf die Auflagefläche aufgelegtem Werkstück einen Mindestabstand zu dem Werkstück aufweist, hin und her beweglich sind.

3. Vorrichtung nach einem der vorangegangen Ansprüche, bei der der Andruckteller (2) eine Auflageseite (4) aufweist, über die der Andruckteller (2) auf einem flächigen Werkstück auflegbar ist, wobei der Andruckteller einen Werkzeugdurchlass (5) aufweist, der sich senkrecht zur Auflageseite (4) durch den Andruckteller (2) hindurch erstreckt, wobei sich der Öffnungsquerschnitt des Werkzeugdurchlasses (5) zwischen den Andrucktellerteilen (2.1, 2.2) anteilig, und bei zweiteiliger Ausführung vorzugsweise hälftig, aufteilt, oder sich vollständig über einen der Andrucktellerteile (2.1, 2.2) erstreckt.

4. Vorrichtung nach Anspruch 3, bei der der Andruckteller (2) hälftig geteilt ist, so dass die beiden Andrucktellerteile (2.1, 2.2) eine im Wesentlichen gleich große Teilauflageseite (4.1, 4.2) aufweisen, wobei der Werkzeugdurchlass (5) als ein erster und ein zweiter Ausschnitt (6.1, 6.2) im Randbereich der beiden Andrucktellerteile (2.1, 2.2) ausgebildet ist.

5. Vorrichtung nach einem der Ansprüche 1 bis 4, bei der an einer der Auflageseite (4) gegenüber liegenden Seite des Andrucktellers (2) eine Spanabsaugung ausgebildet ist, die eine Absaugkammer (7) aufweist, in die der Werkzeugdurchlass (5) und eine Saugleitung (8) münden.

6. Vorrichtung nach einem der vorangegangen Ansprüche, bei der der Andruckteller (2) eine Auflageseite (4) aufweist, über die der Andruckteller (2) auf einem flächigen Werkstück auflegbar ist, wobei auf der Auflageseite (4) eine Leichtlauflagerung angeordnet ist, sodass der Bearbeitungskopf bei auf dem Werkstück aufgelegtem Andruckteller (2) leichtgängig über die Werkstückoberfläche geführt werden kann.

7. Vorrichtung nach Anspruch 6, bei dem die Leichtlauflagerung mindestens eine von Druckluft umspülte Kugelrolle (9) aufweist, so dass sich im Bereich um die Kugelrolle (9) befindende Fremdkörper auf dem Werkstück, wie Metallspäne, von der Kugelrolle (9) fern gehalten sind.

## Claims

1. A device for machining a planar workpiece, having a machine stand which has an application surface for a planar workpiece, and further having a machining head which can be moved relative to the application surface, which machining head has a tool for machining the workpiece and also has a hold-down unit (1) with a pressure plate (2) whereby the workpiece is pressed against the application surface, wherein the pressure plate (2) has a structure which is comprised of a plurality of parts, preferably two parts, wherein at least one of the pressure plate parts (2.1, 2.2) is movable back and forth relative to at least one other pressure plate part (2.1, 2.2), namely it is movable between the application position, in which the pressure plate part (2.1, 2.2) presses the workpiece against the application surface when the workpiece sits on said application surface, and a released position, in which the pressure plate part (2.1, 2.2) is at a minimum distance away from the workpiece when the workpiece sits on said application surface,
**characterized in that** the pressure plate (2) is divided horizontaly or vertically, wherein at least one of the pressure plate parts (2.1, 2.2) is movable back and forth, in a swinging movement, between the application position and the released position, by means of a displacing unit(3).

2. The device according to claim 1, wherein all of the pressure plate parts (2.1, 2.2) mutually independently are moved back and forth between an application position in which a given pressure plate part (2.1, 2.2) presses the workpiece against the application surface when the workpiece sits on said application surface, and a released position, in which the pressure plate part (2.1, 2.2) is at a minimum distance away from the workpiece when the workpiece sits on said application surface.

3. The device according to any of the preceding claims, wherein the pressure plate (2) has an application side (4) by means of which the pressure plate (2) can be applied to a planar workpiece, and the pressure plate has a workpiece passageway (5) extending through the pressure plate (2) perpendicularly to the application side (4), wherein the opening cross section of the workpiece passageway (5) is divided between the pressure plate parts (2.1, 2.2), wherewith in the case of a two-part realization it is preferably divided in the amount of one half for each pressure plate part, or extends completely over one of the pressure plate parts (2.1, 2.2).

4. The device according to claim 3, wherein the pressure plate (2) is divided in half, with the two pressure plate parts (2.1, 2.2) each having a partial application side (4.1, 4.2) which is substantially the same size as the other, and wherein the workpiece passageway (5) is formed as a first and a second recess (6.1, 6.2) in the edge regions of the two pressure plate parts (2.1, 2.2).

5. The device according to any of claims 1 to 4, wherein a chip suction system is formed on a side of the pressure plate (2) opposite to the application side (4) the chip suction system comprising a suction chamber (7) into which the workpiece passageway (5) and a suction line (8) open.

6. The device according to any of the preceding claims, wherein the pressure plate (2) has an application side (4) via which the pressure plate (2) can be applied against a planar workpiece, wherein a bearing means to facilitate smooth movement is arranged on the application side (4), so that the machining head can be smoothly guided over the workpiece surface when the pressure plate (2) is applied to the workpiece.

7. The device according to claim 6, wherein the bearing means to facilitate smooth movement has at least one spherical roller (9) which has compressed air flowing around it, so that foreign bodies on the workpiece in the region around the spherical roller (9), e.g. metal chips, will be kept away from the spherical roller (9).

## Revendications

1. Dispositif destiné à l'usinage par enlèvement de copeaux d'un pièce plane, avec un montant de machine qui comporte une surface d'appui pour une pièce plane, et avec une tête d'usinage, déplaçable relativement à la surface d'appui, qui comporte un outil pour l'usinage par enlèvement de copeaux de la pièce ainsi qu'une unité de serre-flan (1) avec un plateau de pression (2) avec lequel la pièce est pressée contre la surface d'appui, le plateau de pression (2) étant réalisé en plusieurs parties et de préférenoe en deux parties, et au moins une des parties de plateau de pression (2.1, 2.2) pouvant effectuer un mouvement de va-et-vient en relation avec au moins une autre des parties de plateau de pression (2.1, 2.2) entre une position de pression dans laquelle la partie de plateau de pression (2.1, 2.2) presse la pièce contre la surface d'appui quand la pièce est placée sur la surface d'appui, et une position de libération dans laquelle la partie de plateau de pression (2.1, 2.2) présente une distance minimale à la pièce quand la pièce est posée sur la surface d'appui, **caractérisé en ce que** le plateau de pression (2) comporte une division horizontale ou une division verticale, au moins une des parties de plateau de pression (2.1, 2.2) étant guidée dans un mouvement de va-et-vient pivotant par le biais d'une unité de réglage (3) entre la position de pression et la position de libération.

2. Dispositif selon la revendication 1, dans lequel toutes les parties de plateau de pression (2.1, 2.2) peuvent effectuer un mouvement de va-et-vient indépendamment les unes des autres entre une position de pression dans laquelle la partie de plateau de pression (2.1, 2.2) respective presse la pièce contre la surface d'appui quand la pièce est posée sur la surface d'appui, et une position de libération dans laquelle la partie de plateau de pression (2.1, 2.2) respective présente une distance minimale à la pièce quand la pièce est posée sur la surface d'appui.

3. Dispositif selon l'une des revendications précédentes, dans lequel le plateau de pression (2) comporte une face d'appui (4) par le biais de laquelle le plateau de pression (2) peut être posé sur une pièce plane, le plateau de pression comportant un passage d'outil (5) qui s'étend perpendiculairement à la face d'appui (4) à travers le plateau de pression (2), la section transversale d'ouverture du passage d'outil (5) se répartissant de façon proportionnée entre les parties de plateau de pression (2.1, 2.2), et de préférence par moitié en cas de réalisation en deux partie, ou s'étend totalement sur une des parties de plateau de pression (2.1, 2.2).

4. Dispositif selon la revendication 3, dans lequel le plateau de pression (2) est divisé par moitié de telle sorte que les deux parties de plateau de pression (2.1, 2.2) comportent une face d'appui partielle (4.1, 4.2) essentiellement de même dimension, le passage d'outil (5) étant constitué en tant que première et deuxième découpe (6.1, 6.2) dans la zone de bord des deux parties de plateau de pression (2.1, 2.2).

5. Dispositif selon l'une des revendications 1 à 4, dans lequel, sur une face du plateau de pression (2) située en face de la face d'appui (4), il est constitué une aspiration des copeaux qui comporte une chambre d'aspiration (7) dans laquelle débouchent le passage d'outil (5) et une conduite d'aspiration (8).

6. Dispositif selon l'une des revendications précédentes, dans lequel le plateau de pression (2) comporte une face d'appui (4) par le biais de laquelle le plateau de pression (2) peut être posé sur une pièce plane, un roulement léger étant disposé sur la face d'appui (4) de telle sorte que la tête d'usinage peut être guidée aisément sur la surface de pièce quand le plateau de pression (2) est posé sur la pièce.

7. Dispositif selon la revendication 6, dans lequel le palier à roulement léger comporte au moins un rouleau à billes (9) balayé par de l'air comprimé de telle sorte que des corps étrangers sur la pièce situés dans la zone autour du rouleau à billes (9), tels que copeaux métalliques, sont tenus éloignés du rouleau à billes (9).
